# EUROPEAN PATENT SPECIFICATION

(11) **EP 2 539 282 B1**
(45) Date of publication and mention of the grant of the patent: **08.01.2014**
(21) Application number: 11705864.4
(22) Date of filing: 22.02.2011
(51) Int. Cl.: C02F 1/42, C02F 1/68, C02F 1/28

(54) **DEVICE AND METHOD FOR WATER TREATMENT**
VORRICHTUNG UND VERFAHREN ZUR WASSERAUFBEREITUNG
DISPOSITIF ET PROCEDE POUR LE TRAITEMENT DE L'EAU

(30) Priority: 22.02.2010 IT PD20100049
(43) Date of publication of application: 02.01.2013
(73) Proprietor: Struttura S.r.L., 36021 Barbarano Vicentino (VI) (IT)
(72) Inventor: CAGNONI, Serena, I-35035 Mestrino (PD) (IT)
(74) Representative: Locas, Davide
(86) International application number: PCT/EP2011/052574
(87) International publication number: WO 2011/101483

(56) References cited:
- WO-A1-2008/065099

## Description

### Technical field

The invention relates to a method for treating drinking water by using an ion exchange resin and a percolation system of the type having a filter cartridge including that resin, comprising the characteristics set out in the preamble of the main claims.

Those methods and filter systems are widely used in the treatment of water for domestic/foodstuff use for constructing jugs, cafetieres and electric kettles.

### Technological background

In the relevant technical field, it is known to use filter systems for the treatment of water for domestic use, wherein a replaceable cartridge type filter is tightly inserted in a pipe of the filter system in such a manner that the water passing through that pipe is forced to pass through the filter and the bed of filter material contained therein. That system is used to construct jugs and kettles provided for the filtering treatment of water for domestic use. Cartridge type filters used in those systems may have filter beds of different compositions in accordance with the specific chemical/physical function desired. For example, there can be used filters whose filter material is suitable for the generic treatment of drinking water, or which contains specific agents for correcting the hardness, removing tastes and odours, selectively removing predetermined contaminants (chlorine and derivatives, heavy metals, pesticides), or even capable of carrying out a bacteriological treatment of the treated water.

In particular, in order to correct the hardness of the water and the quantity of heavy metals dissolved therein, there are commonly used ion exchange resins, which are generally composed of a polymer matrix (generally granules a few millimetres in diameter) and which release ions of the correct chemical structure, thereby bringing about ion exchange with the water which passes through it. Those resins may have acid groups (cation exchange resins), or basic groups (anion exchange resins). Acid groups of the resins of the first type may be sulphonic groups, -SO₃H, having a strongly acidic character (and therefore called strong acid resins), or carboxylic groups, -COOH, having a more weakly acidic character (and therefore referred to as weak acid resins). If a solution of a base or a salt is flowed through a layer of cation exchange resin inside the cartridge, the cations salify, via a reversible process, the acid groups of the resin, to which they thus become fixed. The process is reversible.

With regard to cation exchange resins which are weakly acidic, their use is known in the reduction of the hardness of water, for example, the hardening agents and the heavy metals of drinking water are exchanged with hydrogen ions of the ion exchange resin.

However, an excess of hydrogen ions in the water is unfavourable in that it can excessively lower the pH of the water itself, making it acidic, whilst drinking water or tapwater preferably has a pH greater than or equal to 6.8.

It is further known to use a weakly acidic ion exchanger which is enriched or loaded with magnesium ions at least in respect of a portion of the ion exchange capacity thereof in order to soften the water.

In particular in DE 3243147, there is described a process for the treatment of seawater by means of a vaporizer and/or reverse osmosis, wherein there is used an ion exchanger loaded with magnesium ions.

WO 2008/062099 discloses a process for enriching the water with magnesium ions in place of calcium ions and/or heavy metal ions which uses an ion exchanger which is loaded with magnesium ions at least in respect of a portion of its ion exchange capacity.

### Description of the invention

In the field of jugs - or generally filtering systems - for the treatment of drinking water, it is desirable for the jugs to treat a substantial quantity of water, in the order of several hundreds litres, before the cartridge containing the ion exchange resin is replaced.

In the present invention, therefore, the type of ion exchanger selected is an ion exchange material which is weakly acidic because it has a longer "life time" than strongly acidic materials and allows slower ion exchange, achieving the treatment of the relatively substantial quantity of water required.

Those ion exchange materials are, for example, resins such as synthetic polymer resins.

The mentioned resins of the weakly acidic type are not regenerable, not in a complete manner, and therefore the cartridge included in the filtering system at the end of its service-life, that is to say, when it is no longer able to carry out exchange, is thrown away, thereby allowing simple use of the jug without providing for regeneration cycles.

The technical problem addressed by the present invention is to obtain a good removal of the heavy metals in the water, with any type of initial water, and at the same time to obtain a pH which is substantially neutral or which is only slightly different from neutrality conditions, for example a pH in the range from 6.5 to 7.5. A range between 6.8 and 7.5 is most preferable. A higher pH may involve a taste of the water that is subjectively unpleasant. It is further important that the filtered water does not have a hardness that is either too high or too low, as set out below.

The Applicant has set out how a weakly acidic ion exchange resin loaded with 100% of magnesium ions is not able to solve that problem because the pH of water filtered in that manner is excessively basic and also the hardness thereof is excessively unbalanced. In fact, a release of only magnesium ions excessively increases the hardness of the water, a problem encountered in particular when the hardness of water is already initially high.

In addition, in relation to the range of magnesium used in the resin described in WO 2008/062099, that is to say, a maximum of 70%, the Applicant has observed how, within it, there was not a correct equilibrium of the mineral salts present in water, as set out in greater detail below.

According to the invention, therefore, there is used for the treatment of water a weakly acidic ion exchange resin loaded with magnesium ions at a percentage between 83% and 91%.

The range of pH values for water intended for human consumption indicated in the European Directive 98/83 is from 6.5 to 8.5.

The same range is indicated by the World Health Organisation as the range for the majority of water intended for human consumption.

Keeping the pH value within those limits in the filtered water is fundamental and, in the case relating to the present invention, is even more difficult because the pH value of the initial water is not known.

The pH value is also a fundamental aspect of water and the unbalancing thereof towards excessively low or excessively high values may involve undesirable effects for humans.

The resin of the present invention in the preferred embodiment cannot lead to any risk of excessively low pH values given that the release of magnesium ions prevents an increase in the concentration of hydrogen ions. Therefore, there is certainty that the pH value will always be greater than 6.5, which is the minimum value admissible for drinking water.

However, it is necessary to control the upper limit. According to sources at the World Health Organisation, water with excessively high pH values (greater than 10) can lead to gastrointestinal irritation in sensitive subjects.

An excessively high pH value of the water can further lead to undesirable aesthetic consequences. According to the United States Environmental Protection Agency, water having a pH value greater than 8.5 does not pose obvious risks to health, but instead aesthetic risks such as: forming precipitates, an alkaline taste of the water and bitterness of coffee prepared therewith.

Considering that:
- the pH value which characterizes drinking water of various geographical areas may also vary substantially towards high values of alkalinity,
- water filtered with gravity type filter systems is also indicated for the preparation of hot drinks and food,

it is considered advantageous to ensure that the pH value of the filtered water does not exceed the values indicated as safety limits.

For example, with the percentage of magnesium indicated in the present invention, the laboratory tests conducted on 160 litres in respect of the service-life of the cartridge gave a maximum pH value of 8.2 in the filtered water starting from a pH value of 6.7 in the water to be filtered. Those tests are described below.

Considering that the pH value of the initial water can be higher than 6.7, it is considered that an ion exchange resin loaded with magnesium ions at a percentage of 100% may involve the risk of alkalinity above the recommended values and it is considered that the range selected is the one which is most suitable for keeping the pH value of the filtered water within the optimum range.

The term "resin loaded with ..." is intended to be understood as follows.

The exchange resin removes the heavy metals from the water via an ion exchange mechanism in which an ion (the contaminant) is fixed in position by the resin with substitution of a radical.

The resin is generally synthesized so as to have a surface which is loaded positively (anionic) or negatively (cationic) and furthermore, before being used, it is saturated with an active solution which confers thereon a given quantity of radicals available for the exchange. Therefore, the metal ions react with the resins, becoming fixed thereto, and are substituted by the active group during the contained exchange of the resin. For example, if that resin is loaded with hydrogen, the exchange with the contaminant calcium is as follows:

CaSO₄ + 2 H⁺ ------> H₂SO₄ + Ca⁺⁺

Therefore, a resin loaded with magnesium at between 83% and 91% is a resin in which, for from 83% to 91% of the ion exchange capacity thereof, there is present magnesium which is released into the water, serving to substitute the ions lead, copper, calcium, etc., which are therein and which become attached to the resin in place of the magnesium released.

Naturally, since a given percentage of magnesium ions there is also present in water, the magnesium ions can also become attached to the resin in place of the magnesium which is released or another group present in the resin with which the ion exchange is carried out.

Preferably, the remaining ion exchange capacity of the resin of the invention, or between 9% and 17% of the resin, is loaded with hydrogen ions.

The resin is loaded with those ions so as to change the pH of the water to a neutral value.

Preferably, the ion exchange resin of the present invention is a cationic exchanger. It is known that the exchanger is a cationic exchanger because cations remain in the water after the exchange. A weakly acidic cationic exchanger behaves substantially in the manner of a weak acid.

According to another additional aspect of the invention, the invention relates to a device for filtering water including a cartridge containing a weakly acidic ion exchange material loaded with magnesium ions in a range from 83% to 91% of the ion exchange capacity thereof.

Preferably, according to a separate or additional aspect of the invention, the water is treated by percolation through that filter cartridge.

Advantageously, the filter cartridge in addition to the ion exchange resin described contains vegetable carbon impregnated with silver.

The action of the carbon inside the cartridge involves the absorption of chlorine and derivatives (any chlorine-containing pesticides, other compounds containing chlorine) present in the filtration water. The function of silver is bacteriostatic. The carbon is generally of granular form and inside the cartridge it is preferably mixed with the ion exchange resin in a more or less homogeneous manner. Its action does not influence that of the resin at all, because the method of reducing the chlorine and derivatives is different from that carried out by the resin with regard to the hardness and the heavy metals: the first by means of adsorption and by means of ion exchange the second.

In addition or alternatively, the cartridge further contains mechanical filtering means, such as a bush above the cartridge, or at the start of the filtering cycle of the water and/or a filtering mesh at the end of the cartridge, or at the point of outflow of the water after percolation.

### Brief description of the drawings

The features and advantages of the invention will be better appreciated from the following detailed description of a preferred though non-limiting embodiment which is illustrated, by way of non-limiting example, with reference to the appended drawings, in which:

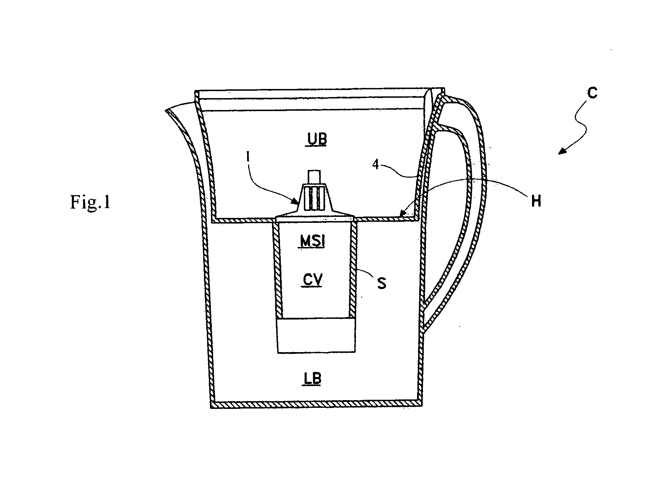

Figure 1 is a partially sectioned schematic view of a filter jug including a cartridge comprising an ion exchange material constructed in accordance with the present invention.

### Preferred embodiment of the invention

In Figure 1, a filter cartridge of the replaceable type is generally designated 1 and is intended for percolation type filtering devices such as filter jugs, infusers, cafetieres and the like. Typically, those devices, such as, for example, a jug C of Figure 1, include a separator or hopper H which divides the jug C into an upper tank UB, for containing water to be filtered, and a lower tank LB, for collecting filtered water. In a seat S of the hopper H there is received the cartridge 1 so that it is passed through by the entire flow of water to be filtered.

The water to be treated is introduced inside the upper tank UB and, owing to gravity, it flows through the cartridge 1, thereby reaching the lower tank.

The cartridge 1 contains an ion exchange material IEM constructed according to the invention, i.e. a weakly acidic cation exchange resin loaded with magnesium ions at a percentage from 83% to 91% in such a manner that, when the water flows through the cartridge 1, the heavy metal ions and the calcium ions contained therein are substituted by magnesium ions. That resin is preferably constructed in granular form.

Furthermore, those ions are alternatively substituted with hydrogen ions, which are also present in the resin in the remaining part not occupied by magnesium ions.

Preferably, the cartridge 1 further contains vegetable carbon CV impregnated with silver, for example a carbon which is derived from coconut shells and which is impregnated with silver.

The ion exchange resin IEM is, according to a preferred method of the invention, obtained by conversion to magnesium form of the resin in hydrogen form previously partially converted to sodium form. The partial conversion to sodium form is brought about by reacting the resin in hydrogen form with a precise quantity of sodium hydroxide, which quantity is calculated so as to obtain the partial conversion desired. The resin obtained in this manner is then converted to magnesium form by contact with a solution of chloride or magnesium sulphate. There is thereby produced a substitution of the sodium ions in the resin with magnesium ions, without affecting the proportion in relation to exchange groups in hydrogen form, which is unchanged in the end product.

This method according to the invention is preferred, though not the only one which may be used, because it increases the reliability of producing a resin with partial, homogeneous conversion, that is to say, with granular material (for example, pearls) all having the same partial conversion, so that the resin has performance levels which can be reproduced over time, independently of the sample examined.

For example, in the case of an admixture of a resin in magnesium form and a resin in hydrogen form, it would be possible to obtain only a resin with average conversion to the desired form, forcedly composed of granular material which is completely in magnesium form or completely in hydrogen form, which in the case of incomplete mixing of the two components would provide variable operating results.

In the laboratory tests discussed below, the resin IEM according to the invention obtained according to the above method was subjected to contact with samples of tapwater which contained calcium ions and magnesium ions as well as heavy metal ions in different concentrations. Before and after the tapwater flowed through the ion exchanger IEM, the content of the samples was measured in terms of calcium ions and magnesium ions and/or heavy metal ions in order to evaluate the action of the resin IEM.

Water filtered with resins including magnesium outside the above-mentioned range cannot be used for the purposes of the invention. An example is given by the following test in which the jug of Figure 1 was used to filter tapwater through an ion exchanger including a resin loaded with magnesium at approximately 35%.

The initial water has the following characteristics:

**Table 1**

| | U.M. | Method | Result |
|---|---|---|---|
| Magnesium | Mg/L | EPA 6010 2007 | 15.3 |
| Hardness | °F | APAT CNR-IRSA 2040B Man 29 2003 | 22 |

Using the above-mentioned resin loaded with a percentage of Mg less than the minimum limit of the range of the invention, the filtered water has the following characteristics of Table 2 (there are illustrated a plurality of analyses, each one after the specified number of litres):

**Table 2**

| | U.M. | Method | Result | |
|---|---|---|---|---|
| Magnesium | Mg/L | EPA 6010 2007 | 32 | Analyses 1^{st} litre |
| Hardness | °F | APAT CNR-IRSA 2040B Man 29 2003 | 16 | |
| | | | | |
| Magnesium | Mg/L | EPA 6010 2007 | 32 | Analyses 8^{th} litre |
| Hardness | °F | APAT CNR-IRSA 2040B Man 29 2003 | 13 | |
| | | | | |
| Magnesium | Mg/L | EPA 6010 2007 | 32 | Analyses 16 ^{th} litre |
| Hardness | °F | APAT CNR-IRSA 2040B Man 29 2003 | 16 | |
| | | | | |
| Magnesium | Mg/L | EPA 6010 2007 | 32 | Analyses 32^{th} litre |
| Hardness | °F | APAT CNR-IRSA 2040B Man 29 2003 | 17 | |
| | | | | |
| Magnesium | Mg/L | EPA 6010 2007 | 26 | Analyses 62^{th} litre |
| Hardness | °F | APAT CNR-IRSA 2040B Man 29 2003 | 18 | |
| | | | | |
| Magnesium | Mg/L | EPA 6010 2007 | 22.6 | Analyses 102^{th} litre |
| Hardness | °F | APAT CNR-IRSA 2040B Man 29 2003 | 18 | |

This table sets out how the hardness of the filtered water is excessively low, a characteristic which affects the equilibrium of the mineral salts normally present in the water itself and which it is desirable to maintain. In particular, above all in the case of a predisposition to some pathologies, it is important to provide ions of mineral salts for prevention purposes, in particular it is desirable to obtain a hardness above 15°F.

The resin of the invention is suitable for being introduced in commercial cartridges which are used with any type of water, for which a priori the hardness is not known, but they have to be able to maintain a hardness value that is "acceptable", or a hardness greater than 15°F with any given initial hardness, or with water having very low hardness of approximately 10°F. Therefore, the Applicant found that such acceptable hardness is established only with a concentration of Mg in the resin above 83%.

It has further been found that, for a resin loaded with magnesium above 91%, there is an excessive release of Mg, conversely making the water excessively hard, in particular for water whose initial hardness is greater than 25°F. In particular the initial hardness is not maintained. Furthermore, an excess of magnesium substantially prevents the release of hydrogen ions, preventing the water from reaching a pH value that is substantially neutral.

The following tables set out the analyses of the initial water (Table 3 and Table 5) with their content of heavy metals and the filtered water (Tables 4 and 6) using two different resins which are both produced according to the invention, the first containing a load of magnesium of 84% (Resin 1), and the second one of 90% (Resin 2). The remainder of the resin is loaded with hydrogen. The data are set out in accordance with the volume of water gradually treated in succession with the same cartridge 1.

**Table 3**

| Data of the initial water subsequently treated with Resin 1: | | | |
|---|---|---|---|
| | U.M. | Method | Result |
| Hardness | °F | APAT CNR-IRSA 2040B Man 29 2003 | 23.2 |
| Free active chlorine | Mg/L Cl₂ | APAT CNR-IRSA 4020 Man 29 2003 | 0.57 |
| Copper | Mg/L | EPA 6010C 2007 | 2.0 |
| Lead | Mg/L | EPA 6010C 2007 | 1.7 |
| Zinc | Mg/L | EPA 6010C 2007 | 1.7 |
| Mercury | Mg/L | EPA 6010C 2007 | 0.002 |
| pH | Mg/L | EPA 6010C 2007 | 6.7 |

**Table 4**

| The data of the water of Table 3 filtered with Resin 1 are as follows: | | | | |
|---|---|---|---|---|
| | U.M. | Method | Result | |
| Hardness | °F | APAT CNR-IRSA 2040B Man 29 2003 | 7.2 | Analyses 1^{st} litre |
| Free active chlorine | Mg/L Cl₂ | APAT CNR-IRSA 4020 Man 29 2003 | 0.3 | |
| Copper | Mg/L | EPA 6010C 2007 | 0.25 | |
| Lead | Mg/L | EPA 6010C 2007 | 1.4 | |
| Zinc | Mg/L | EPA 6010C 2007 | 0.22 | |
| Mercury | Mg/L | EPA 6010C 2007 | <0.001 | |
| pH | Mg/L | EPA 6010C 2007 | 6.8 | |
| | | | | |
| Hardness | °F | APAT CNR-IRSA 2040B Man 29 2003 | 21.2 | Analyses 5^{th} litre |
| Free active chlorine | Mg/L Cl₂ | APAT CNR-IRSA 4020 Man 292003 | 0.29 | |
| Copper | Mg/L | EPA 6010C 2007 | 0.23 | |
| Lead | Mg/L | EPA 6010C 2007 | 0.9 | |
| Zinc | Mg/L | EPA 6010C 2007 | 0.23 | |
| Mercury | Mg/L | EPA 6010C 2007 | <0.001 | |
| pH | Mg/L | EPA 6010C 2007 | 6.7 | |
| | | | | |
| Hardness | °F | APAT CNR-IRSA 2040B Man 29 2003 | 21.6 | Analyses 8^{th} litre |
| Free active chlorine | Mg/L Cl₂ | APAT CNR-IRSA 4020 Man 29 2003 | 0.33 | |
| Copper | Mg/L | EPA 6010C 2007 | 0.22 | |
| Lead | Mg/L | EPA 6010C 2007 | 0.9 | |
| Zinc | Mg/L | EPA 6010C 2007 | 0.25 | |
| Mercury | Mg/L | EPA 6010C 2007 | <0.001 | |
| pH | Mg/L | EPA 6010C 2007 | 6.6 | |
| | | | | |
| Hardness | °F | APAT CNR-IRSA 2040B Man 29 2003 | 21.6 | Analyses 30^{th} |
| Free active chlorine | Mg/L Cl₂ | APAT CNR-IRSA 4020 Man 29 2003 | 0.28 | |
| Copper | Mg/L | EPA 6010C 2007 | 0.19 | |
| Lead | Mg/L | EPA 6010C 2007 | 0.61 | |
| Zinc | Mg/L | EPA 6010C 2007 | 0.31 | |
| Mercury | Mg/L | EPA 6010C 2007 | <0.001 | |
| pH | Mg/L | EPA 6010C 2007 | 6.9 | |
| | | | | |
| Hardness | °F | APAT CNR-IRSA 2040B Man 29 2003 | 18.4 | Analyses 48^{th} litre |
| Free active chlorine | Mg/L Cl₂ | APAT CNR-IRSA 4020 Man 29 2003 | 0.34 | |
| Copper | Mg/L | EPA 6010C 2007 | 0.19 | |
| Lead | Mg/L | EPA 6010C 2007 | 0.30 | |
| Zinc | Mg/L | EPA 6010C 2007 | 0.33 | |
| Mercury | Mg/L | EPA 6010C 2007 | <0.001 | |
| pH | Mg/L | EPA 6010C 2007 | 6.7 | |
| | | | | |
| Hardness | °F | APAT CNR-IRSA 2040B Man 29 2003 | 20 | Analyses 96^{th} litre |
| Free active chlorine | Mg/L Cl₂ | APAT CNR-IRSA 4020 Man 29 2003 | 0.34 | |
| Copper | Mg/L | EPA 6010C 2007 | 0.32 | |
| Lead | Mg/L | EPA 6010C 2007 | 0.34 | |
| Zinc | Mg/L | EPA 6010C 2007 | 0.54 | |
| Mercury | Mg/L | EPA 6010C 2007 | <0.001 | |
| pH | Mg/L | EPA 6010C 2007 | 7.1 | |
| | | | | |
| Hardness | °F | APAT CNR-IRSA 2040B Man 29 2003 | 20.4 | Analyses 153^{th} litre |
| Free active chlorine | Mg/L Cl₂ | APAT CNR-IRSA 4020 Man 29 2003 | 0.31 | |
| Copper | Mg/L | EPA 6010C 2007 | 0.46 | |
| Lead | Mg/L | EPA 6010C 2007 | 0.30 | |
| Zinc | Mg/L | EPA 6010C 2007 | 0.77 | |
| Mercury | Mg/L | EPA 6010C 2007 | <0.001 | |
| pH | Mg/L | EPA 6010C 2007 | 8.2 | |

**Table 5**

| Data of the initial water subsequently treated with Resin 2: | | | |
|---|---|---|---|
| | U.M. | Method | Result |
| Hardness | °F | APAT CNR-IRSA 2040B Man 29 2003 | 23.6 |
| Free active chlorine | Mg/L Cl₂ | APAT CNR-IRSA 4020 Man 29 2003 | 0.72 |
| Copper | Mg/L | EPA 6010C 2007 | 1.8 |
| Lead | Mg/L | EPA 6010C 2007 | 1.6 |
| Zinc | Mg/L | EPA 6010C 2007 | 1.8 |
| Mercury | Mg/L | EPA 6010C 2007 | 0.002 |
| pH | Mg/L | EPA 6010C 2007 | 6.7 |

**Table 6**

| The data of the water of Table 5 filtered with Resin 2 are as follows: | | | | |
|---|---|---|---|---|
| | U.M. | Method | Result | |
| Hardness | °F | APAT CNR-IRSA 2040B Man 29 2003 | 13.2 | Analyses 1^{st} litre |
| Free active chlorine | Mg/L Cl₂ | APAT CNR-IRSA 4020 Man 29 2003 | 0.044 | |
| Copper | Mg/L | EPA 6010C 2007 | 0.12 | |
| Lead | Mg/L | EPA 6010C 2007 | 0.26 | |
| Zinc | Mg/L | EPA 6010C 2007 | 0.23 | |
| Mercury | Mg/L | EPA 6010C 2007 | <0.001 | |
| pH | Mg/L | EPA 6010C 2007 | 6.7 | |
| | | | | |
| Hardness | °F | APAT CNR-IRSA 2040B Man 29 2003 | 21.2 | Analyses 5^{th} litre |
| Free active chlorine | Mg/L Cl₂ | APAT CNR-IRSA 4020 Man 29 2003 | 0.032 | |
| Copper | Mg/L | EPA 6010C 2007 | 0.32 | |
| Lead | Mg/L | EPA 6010C 2007 | 0.29 | |
| Zinc | Mg/L | EPA 6010C 2007 | 0.49 | |
| Mercury | Mg/L | EPA 6010C 2007 | <0.001 | |
| pH | Mg/L | EPA 6010C 2007 | 7.2 | |
| | | | | |
| Hardness | °F | APAT CNR-IRSA 2040B Man 29 2003 | 23.2 | Analyses 8^{th} litre |
| Free active chlorine | Mg/L Cl₂ | APAT CNR-IRSA 4020 Man 29 2003 | 0.032 | |
| Copper | Mg/L | EPA 6010C 2007 | 0.32 | |
| Lead | Mg/L | EPA 6010C 2007 | 0.28 | |
| Zinc | Mg/L | EPA 6010C 2007 | 0.49 | |
| Mercury | Mg/L | EPA 6010C 2007 | <0.001 | |
| pH | Mg/L | EPA 6010C 2007 | 6.7 | |
| | | | | |
| Hardness | °F | APAT CNR-IRSA 2040B Man 29 2003 | 23.0 | Analyses 30^{th} litre |
| Free active chlorine | Mg/L Cl₂ | APAT CNR-IRSA 4020 Man 29 2003 | 0.057 | |
| Copper | Mg/L | EPA 6010C 2007 | 0.22 | |
| Lead | Mg/L | EPA 6010C 2007 | 0.57 | |
| Zinc | Mg/L | EPA 6010C 2007 | 0.44 | |
| Mercury | Mg/L | EPA 6010C 2007 | <0.001 | |
| pH | Mg/L | EPA 6010C 2007 | 7.1 | |
| | | | | |
| Hardness | °F | APAT CNR-IRSA 2040B Man 29 2003 | 22.8 | Analyses 48^{th} litre |
| Free active chlorine | Mg/L Cl₂ | APAT CNR-IRSA 4020 Man 29 2003 | 0.058 | |
| Copper | Mg/L | EPA 6010C 2007 | 0.31 | |
| Lead | Mg/L | EPA 6010C 2007 | 0.56 | |
| Zinc | Mg/L | EPA 6010C 2007 | 0.52 | |
| Mercury | Mg/L | EPA 6010C 2007 | <0.001 | |
| pH | Mg/L | EPA 6010C 2007 | 7.5 | |
| | | | | |
| Hardness | °F | APAT CNR-IRSA 2040B Man 29 2003 | 26.2 | Analyses 96^{tn} litre |
| Free active chlorine | Mg/L Cl₂ | APAT CNR-IRSA 4020 Man 29 2003 | 0.076 | |
| Copper | Mg/L | EPA 6010C 2007 | 0.32 | |
| Lead | Mg/L | EPA 6010C 2007 | 0.51 | |
| Zinc | Mg/L | EPA 6010C 2007 | 0.69 | |
| Mercury | Mg/L | EPA 6010C 2007 | <0.001 | |
| pH | Mg/L | EPA 6010C 2007 | 7.6 | |
| | | | | |
| Hardness | °F | APAT CNR-IRSA 2040B Man 29 2003 | 21.6 | Analyses 160^{th} litre |
| Free active chlorine | Mg/L Cl₂ | APAT CNR-IRSA 4020 Man 29 2003 | 0.077 | |
| Copper | Mg/L | EPA 6010C 2007 | 0.34 | |
| Lead | Mg/L | EPA 6010C 2007 | 0.5 | |
| Zinc | Mg/L | EPA 6010C 2007 | 0.71 | |
| Mercury | Mg/L | EPA 6010C 2007 | <0.001 | |
| pH | Mg/L | EPA 6010C 2007 | 7.1 | |

As can be seen in Tables 4 and 6, the resin according to the invention considerably reduces the quantity of heavy metals in the water whilst keeping the pH value close to a neutral value and the hardness in a range of advantageous values.

The quantity of magnesium in the water substantially remains unchanged with respect to that of the initial water, in the analyses carried out with Resin 1 and Resin 2 above, the mean quantity of Mg in the initial water is 15.3 mg/l with a mean hardness of 23.3°F, and the mean quantity in the filtered water after 150 litres is 20.75 mg/l.

## Claims

1. A method for treating water, particularly drinking water, by using an ion exchanger, comprising the step of flowing water through said ion exchanger, said ion exchanger containing a weakly acidic ion exchange material (IEM) loaded with magnesium ions in a proportion ranging from 83% to 91% of its ion exchange capacity.

2. A water treatment method according to claim 1, wherein said weakly acidic ion exchange material (IEM) is a weakly acidic cation exchange resin.

3. A water treatment method according to claim 1 or claim 2, wherein the portion of weakly acidic ion exchange material (IEM) which is not loaded with magnesium ions is loaded with hydrogen ions.

4. A treatment method according to any one or more of the preceding claims, wherein said step of flowing through said ion exchanger (IEM) includes a step of flowing through by percolation.

5. A water filtering device (C) including a cartridge (1) containing a weakly acidic ion exchange material (IEM) loaded with magnesium ions in a proportion ranging from 83% to 91% of its ion exchange capacity.

6. A device (C) according to claim 5, wherein said weakly acidic ion exchange material (IEM) is a weakly acidic cation exchange resin.

7. A device (C) according to claim 5 or claim 6, wherein the portion of weakly acidic ion exchange material (IEM) which is not loaded with magnesium ions is loaded with hydrogen ions.

8. A cartridge (1) for percolation filtering devices (C), containing a weakly acidic ion exchange material (IEM) loaded with magnesium ions in a proportion ranging from 83% to 91% of its ion exchange capacity.

9. A cartridge (1) for percolation filtering devices (C) according to claim 8, containing vegetable carbon (CV) impregnated with silver.

10. A cartridge (1) for percolation filtering devices (C) according to claim 8 or claim 9, containing a mesh filter placed at the point of outflow of the water from said cartridge.

## Patentansprüche

1. Verfahren zur Behandlung von Wasser, insbesondere von Trinkwasser, unter Verwendung eines Ionenaustauschers, umfassend den Schritt des Strömens von Wasser durch den Ionenaustauscher, wobei der Ionenaustauscher ein schwach saures Ionenaustauschmaterial (IEM) enthält, das in einem Anteil von 83% bis 91% seiner Ionenaustauschkapazität mit Magnesiumionen beladen ist.

2. Wasserbehandlungsverfahren nach Anspruch 1, wobei das schwach saure Ionenaustauschmaterial (IEM) ein schwach saures Kationenaustauschharz ist.

3. Wasserbehandlungsverfahren nach Anspruch 1 oder 2, wobei der Anteil an leicht saurem Ionenaustauschmaterial (IEM), der nicht mit Magnesiumionen beladen ist mit Wasserstoffionen beladen ist.

4. Behandlungsverfahren nach einem oder mehreren der vorhergehenden Ansprüche, wobei der Schritt des Strömens durch den Ionenaustauscher (IEM) einen Schritt des Durchströmens durch Perkolation umfasst.

5. Wasserfiltervorrichtung (C), umfassend eine Kartusche (1), die ein schwach saures Ionenaustauschmaterial (IEM) enthält, das in einem Anteil von 83% bis 91% seiner Ionenaustauschkapazität mit Magnesiumionen beladen ist.

6. Vorrichtung (C) nach Anspruch 5, wobei das schwach saure Ionenaustauschmaterial (IEM) ein schwach saures Kationenaustauschharz ist.

7. Vorrichtung (C) nach Anspruch 5 oder 6, wobei der Anteil an leicht saurem Ionenaustauschmaterial (IEM), der nicht mit Magnesiumionen beladen ist mit Wasserstoffionen beladen ist.

8. Kartusche (1) für Perkolationsfiltervorrichtungen (C), enthaltend ein schwach saures Ionenaustauschmaterial (IEM), das in einem Anteil von 83% bis 91% seiner Ionenaustauschkapazität mit Magnesiumionen beladen ist.

9. Kartusche (1) für Perkolationsfiltervorrichtungen (C) nach Anspruch 8 enthaltend mit Silber imprägnierten pflanzlichen Kohlenstoff (CV).

10. Kartusche (1) für Perkolationsfiltervorrichtungen (C) nach Anspruch 8 oder 9, enthaltend einen Maschenfilter, der am Ausflusspunkt des Wassers aus der Kartusche platziert ist.

## Revendications

1. Procédé pour traiter l'eau, en particulier l'eau potable, en utilisant un échangeur d'ions, comprenant l'étape d'écoulement d'eau à travers ledit échangeur d'ions, ledit échangeur d'ions contenant un matériau d'échange d'ions faiblement acide (IEM) chargé avec des ions magnésium dans une proportion dans la plage de 83 % à 91 % de sa capacité d'échange d'ions.

2. Procédé de traitement de l'eau selon la revendication 1, dans lequel ledit matériau d'échange d'ions faiblement acide (IEM) est une résine d'échange de cations faiblement acide.

3. Procédé de traitement de l'eau selon la revendication 1 ou la revendication 2, dans lequel la portion de matériau d'échange d'ions faiblement acide (IEM) qui n'est pas chargée avec des ions magnésium est chargée avec des ions hydrogène.

4. Procédé de traitement selon l'une quelconque des revendications précédentes, dans lequel ladite étape d'écoulement à travers ledit échangeur d'ions (IEM) comprend une étape d'écoulement par percolation.

5. Dispositif de filtration d'eau (C) comprenant une cartouche (1) contenant un matériau d'échange d'ions faiblement acide (IEM) chargé avec des ions magnésium dans une proportion dans la plage de 83 % à 91 % de sa capacité d'échange d'ions.

6. Dispositif (C) selon la revendication 5, dans lequel ledit matériau d'échange d'ions faiblement acide (IEM) est une résine d'échange de cations faiblement acide.

7. Dispositif (C) selon la revendication 5 ou la revendication 6, dans lequel la portion de matériau d'échange d'ions faiblement acide (IEM) qui n'est pas chargée avec des ions magnésium est chargée avec des ions hydrogène.

8. Cartouche (1) pour des dispositifs de filtration par percolation (C), contenant un matériau d'échange d'ions faiblement acide (IEM) chargé avec des ions magnésium dans une proportion dans la plage de 83 % à 91 % de sa capacité d'échange d'ions.

9. Cartouche (1) pour des dispositifs de filtration par percolation (C) selon la revendication 8, contenant du charbon végétal (CV) imprégné avec de l'argent.

10. Cartouche (1) pour des dispositifs de filtration par percolation (C) selon la revendication 8 ou la revendication 9, contenant un filtre à grille placé au point de sortie de l'eau depuis ladite cartouche.
